# EUROPEAN PATENT APPLICATION

(11) **EP 4 775 419 A1**
(43) Date of publication of application: **15.07.2026**
(21) Application number: 25150876.8
(22) Date of filing: 09.01.2025
(51) Int. Cl.: B60H 1/00, B60H 1/22

(54) **HEATING SYSTEM FOR A VEHICLE**

(71) Applicant: Volvo Bus Corporation, 405 08 Göteborg (SE)
(72) Inventor: TENGGREN, Oscar, 423 36 TORSLANDA (SE); CARLÉN, Andreas, 417 29 GÖTEBORG (SE); ARORA, Pankhuri, 414 57 GÖTEBORG (SE)
(74) Representative: Ström & Gulliksson AB

(57) **Abstract**

A heating system (100) for a vehicle includes a heat pump (108) for delivering a heated fluid at a first temperature, and a first heating loop (318) including a first heating element (320) to heat the heated fluid to a higher second temperature and a first defroster heating subassembly (322) to receive the heated fluid from the first heating element. The system further includes a second heating loop (324) including a passenger heating subassembly (328) to receive the heated fluid from the heat pump (108) to heat a passenger area of the vehicle, and a second defroster heating subassembly (330) in the defroster system to receive the heated fluid from the heat pump.

## Description

### TECHNICAL FIELD

The disclosure relates generally to a heating system. In particular aspects, the disclosure relates to a heating system for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Conventional heating systems for vehicles, such as busses, heavy trucks, etc., may supply several different heating components, e.g., driver heating, passenger heating, vehicle defroster, etc., from a single source of heated fluid, e.g., a heat pump, engine heating elements, electrical heating elements, etc. In these and other types of arrangements, the heating fluid is typically heated to a temperature sufficient to operate the component with the highest temperature demand. For example, in a cold climate, a front box/defroster may typically employ heating fluid at highest possible temperatures. This may lead to operational inefficiencies for the heat pump and greater energy loss as high temperature fluid is delivered to all of the heating components across the entire vehicle. For example, in a passenger bus, the heating fluid may travel long distances from the heating components before being delivered to the driver area to heat the air in the driver area. The heat pump may then ramp down and use other, less efficient heating components, such as electric coolant heating elements, to supply the remaining energy needed to sufficiently heat the fluid. With the lower efficiency from the heat pump, longer distances, and high temperature differential between the heated fluid and the ambient air may result in significant energy loss. There is a need for an arrangement that reduces energy consumption and increases heating efficiency.

### SUMMARY

According to a first aspect of the disclosure, a heating system for a vehicle includes a first heating loop comprising a first heating element to heat a first heated fluid to a first temperature, and a first defroster heating subassembly in a defroster system of the vehicle to receive the heated fluid from the first heating element. The system further includes a second heating loop including a heat pump for delivering a second heated fluid at a second temperature lower than the first temperature, a passenger heating subassembly to receive the heated fluid from the heat pump to heat a passenger area of the vehicle, and a second defroster heating subassembly in the defroster system to receive the heated fluid from the heat pump. The first aspect of the disclosure may seek to reduce energy consumption for heating conditions with the stepwise increased temperature with first and second heating circuit for the frontbox/defroster system. A technical benefit may include increased system efficiency since the second heating loop can keep a lower fluid temperature than would otherwise be needed for the defroster, while the first heating loop provides the remaining energy for the defroster.

Optionally in some examples, including in at least one preferred example, the passenger heating subassembly and the second defroster heating subassembly are arranged in parallel in the second heating loop.

Optionally in some examples, including in at least one preferred example, the passenger heating subassembly and the second defroster heating subassembly are arranged in series in the second heating loop.

Optionally in some examples, including in at least one preferred example, the second heating loop further comprises a driver heating subassembly to receive the second heated fluid from the heat pump to heat a driver area of the vehicle.

Optionally in some examples, including in at least one preferred example, the first heating loop further comprises a driver heating subassembly to receive the first heated fluid from the first heating element to heat a driver area of the vehicle.

Optionally in some examples, including in at least one preferred example, the first heating loop comprises a first supply line to receive the first heated fluid at the first temperature from the first heating element, and the second heating loop comprises a second supply line to receive the second heated fluid from the heat pump.

Optionally in some examples, including in at least one preferred example, at least one return line is connected to at least one of the first heating loop and the second heating loop to return at least one of the first heated fluid and the second heated fluid to the heat pump.

Optionally in some examples, including in at least one preferred example, the first temperature is greater than 65 degrees C.

Optionally in some examples, including in at least one preferred example, the second temperature is less than 50 degrees C.

Optionally in some examples, including in at least one preferred example, the second heating loop comprises a second heating element to heat the second heated fluid received from the heat pump to a third temperature higher than the second temperature and lower than the first temperature, and the passenger heating subassembly and the second defroster heating subassembly receive the second heated fluid at the third temperature from the second heating element.

According to a second aspect of the disclosure, a vehicle includes a defroster system, a driver area, a passenger area, and a heating system. The heating system includes a first heating loop including a first heating element to heat a first heated fluid to a first temperature, and a first defroster heating subassembly in the defroster system to receive the first heated fluid from the first heating element. The heating system further includes a second heating loop including a heat pump for delivering a second heated fluid at a second temperature lower than the first temperature, a passenger heating subassembly to receive the second heated fluid from the heat pump to heat the passenger area, and a second defroster heating subassembly in the defroster system to receive the second heated fluid from the heat pump. The second aspect of the disclosure may seek to reduce energy consumption for heating conditions with the stepwise increased temperature with first and second heating circuit for the frontbox/defroster system. A technical benefit may include increased system efficiency since the second heating loop can keep a lower fluid temperature than would otherwise be needed for the defroster, while the first heating loop provides the remaining energy for the defroster.

Optionally in some examples, including in at least one preferred example, the second heating loop further comprises a driver heating subassembly to receive the second heated fluid from the heat pump to heat the driver area.

Optionally in some examples, including in at least one preferred example, the first heating loop further comprises a driver heating subassembly to receive the first heated fluid from the first heating element to heat the driver area.

Optionally in some examples, including in at least one preferred example, the first temperature is greater than 65 degrees C.

Optionally in some examples, including in at least one preferred example, the second temperature is less than 50 degrees C.

Optionally in some examples, including in at least one preferred example, the vehicle comprises a passenger bus.

Optionally in some examples, including in at least one preferred example, the vehicle comprises a heavy truck.

According to a third aspect of the disclosure, a method includes heating a first heated fluid received at a first heating loop of a vehicle to a first temperature. The method further includes outputting the first heated fluid at the first temperature to a defroster heating subassembly of a defroster system of the vehicle. The method further includes heating a second heated fluid received at a second heating loop of the vehicle to a second temperature lower than the first temperature. The method further includes outputting the second heated fluid at the second temperature to a passenger heating subassembly to heat a passenger area of the vehicle. The method further includes outputting the second heated fluid at the second temperature to the defroster heating subassembly of the defroster system. The third aspect of the disclosure may seek to reduce energy consumption for heating conditions with the stepwise increased temperature with first and second heating circuit for the frontbox/defroster system. A technical benefit may include increased system efficiency since the second heating loop can keep a lower heating power with the supplied heat from the first heating loop.

Optionally in some examples, including in at least one preferred example, the method further includes outputting the first heated fluid at the first temperature to a driver heating subassembly to heat a driver area of the vehicle.

Optionally in some examples, including in at least one preferred example, the method further includes outputting the second heated fluid at the second temperature to a driver heating subassembly to heat a driver area of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 is an exemplary vehicle with a heating system, according to an example.
FIG. 2. is an exemplary diagram of a conventional heating system for a vehicle, according to the prior art.
FIG. 3. is an exemplary diagram of a heating system for the vehicle of FIG. 1, according to an example.
FIG. 4. is an exemplary diagram of an alternative heating system for the vehicle of FIG. 1 with additional components, according to an example.
FIG. 5 is a flow chart of an exemplary method of operating a heating system for a vehicle, according to an example.

### DETAILED DESCRIPTION

The detailed description set forth below provides information and examples of the disclosed technology with sufficient detail to enable those skilled in the art to practice the disclosure.

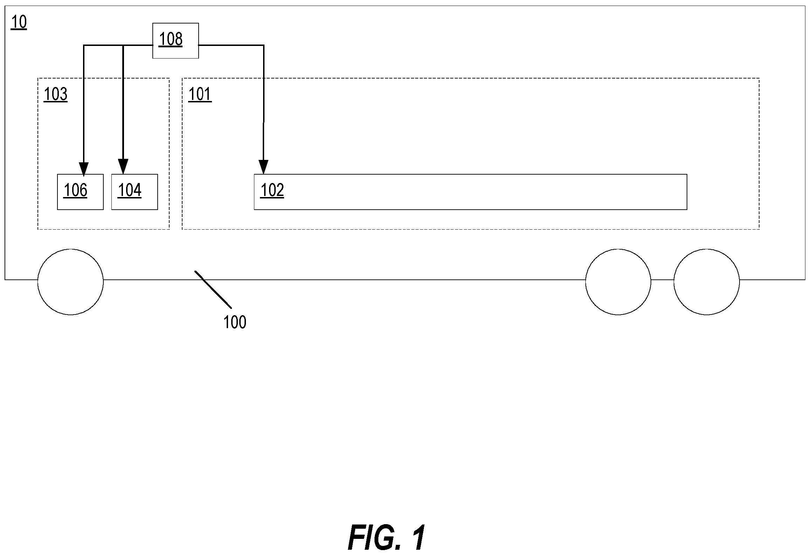

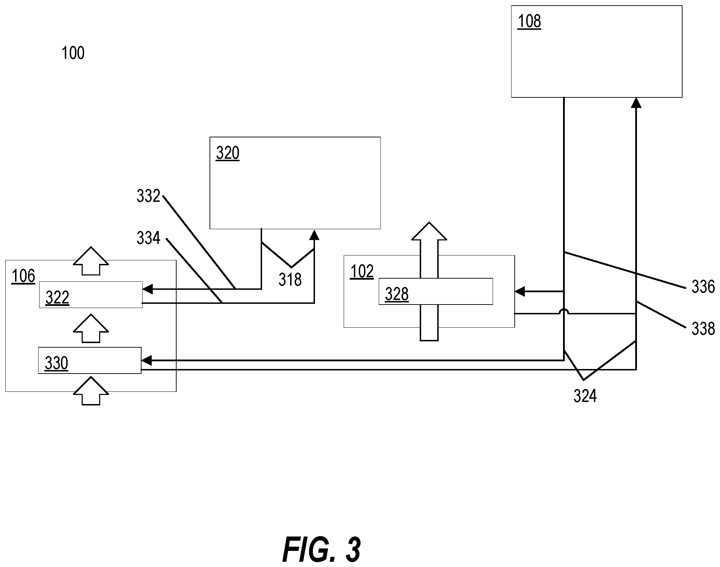

FIG. 1 is an exemplary vehicle 10 with a heating system 100, according to an example. In this example, the vehicle 10 includes different areas, including a passenger area 101 e.g., a passenger compartment on a bus in this example, with a passenger area heater 102, a driver area 103 with a driver area heater 104, etc. It should be understood, however, that the vehicle 10 and/or other vehicles described herein may be of different types, such as heavy trucks, construction vehicles, passenger cars, etc., as desired. The vehicle 10 in this example includes a defroster system 106, e.g., for removing frost and/or condensation from windows of the vehicle 10, and for driver comfort, which may also be referred to as a frontbox. As will be discussed in greater detail with respect to FIG. 3, the heating system 100 includes a heat pump 108 and/or additional heating elements that provide heated fluid to the different areas and/or components of the vehicle 10.

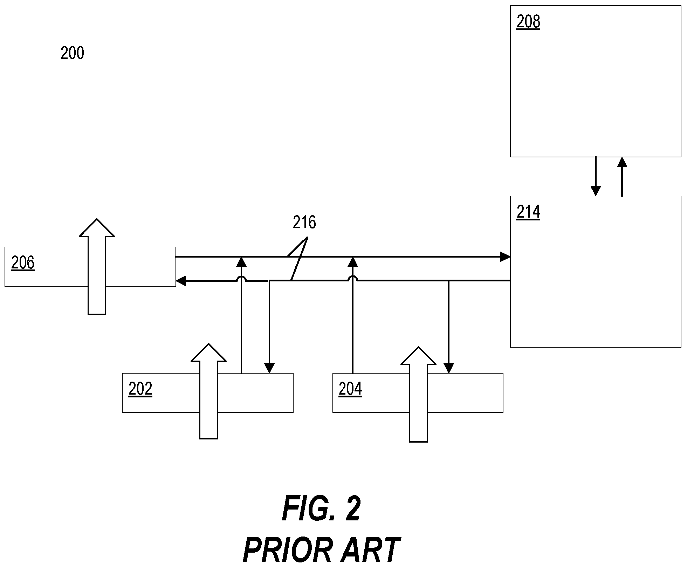

FIG. 2. is an exemplary diagram of a conventional heating system 200 for a vehicle, according to the prior art. In this example, a heat pump 208 provides heating fluid at a baseline temperature to a heating subassembly 214 containing one or more heating elements, which heats the fluid from the baseline temperature to a higher temperature. The heated fluid is distributed via a heating loop 216 to different areas and/or components of the vehicle, such as a passenger area heater 204, driver area heater 202, and/or defroster system 206. In this example, a single source of heating fluid is provided to all of the areas and/or components, with the heating fluid being typically heated to a temperature sufficient to operate the component with the highest temperature demand, e.g the defroster system 206 in this example.

One drawback of conventional systems such as the heating system 200 of FIG. 2 is that many components, such as the passenger area heater 204, may have lower fluid temperature requirements than other components, such as the defroster system 206. For example, fluid temperatures below 65 degrees C may be sufficient to meet the operational demands of the passenger area heater 204. Nevertheless, because of the higher power demands of some components, a higher volume of high temperature fluid is delivered throughout the heating system 200, resulting in wasted energy. The heat pump 208 may also be less efficient when delivering fluid at higher temperatures. In addition, the distribution of the heating fluid to different components throughout the vehicle may result in additional energy loss, and which may be exacerbated by the relatively high temperature differential between the heated fluid (e.g., at 70 degrees C) and the ambient air (which may be significantly below 0 degrees C in cold weather conditions).

To address these and other drawbacks, FIG. 3. is an exemplary diagram of a heating system 100 for the vehicle 10 of FIG. 1, according to an example. In this example, a first heating loop 318 includes a first heating element 320, such as an electric heating element, to heat a first heated fluid to a first temperature. In this example, the first heating loop 318 is primarily for a first defroster heating subassembly 322 in the defroster system 106 of the vehicle 10, which receives the first heated fluid at a relatively high first temperature from the first heating element 320. In this example, the first heating loop 318 includes at least one first supply line 332 to receive the first heated fluid from the first heating element 320 and at least one first return line 334 to return the first heated fluid to the first heating element 320. In this example, the first temperature may be a temperature sufficient to operate the defroster system 106, e.g., 65 degrees C.

A second heating loop 324 is also provided, which is primarily for a passenger heating subassembly 328 of the passenger area heater 102 to heat a passenger area 101 of the vehicle 10. Because the passenger area heater 102 has lower overall temperature requirements than the defroster system 106, a heat pump 108 may deliver a second heated fluid at a second temperature lower than the first temperature. In this example, the second temperature may be an ambient temperature, e.g., up to 50 degrees C or higher in hot conditions, and/or down to -30 degrees C or lower in cold conditions, and/or any other temperature, as desired. In some examples, the second temperature of the second heated fluid delivered form the heat pump 108 may be sufficient to supply the passenger area heater 102 directly, without the need for additional heating. Optionally, in this embodiment, the second heating loop 324 may also include a second heating element 326, such as an electric heating element, to further heat the second heated fluid received from the heat pump 108, e.g., to a third temperature that is higher than the second temperature. It should be noted however, that the third temperature may still be significantly lower than the first temperature of the first heated fluid in the first heating loop 324, because of the lower temperature requirements for the passenger area heater 102. It should also be understood that other types of heating arrangements may be used, such as a direct electrical heating element being disposed in defroster system 106 and/or passenger area heater, etc., in addition to and/or as an alternative to fluid-based heating and cooling components.

In this example, the second heating loop 324 also supplies the second heated fluid to a second defroster heating subassembly 330 in the defroster system 106. In this example, the second heating loop 324 includes at least one second supply line 336 to receive the second heated fluid from the heat pump 108 and at least second return line 338 to return the second heated fluid to the heat pump 108. In this example, the third temperature may be a temperature sufficient to operate the passenger area heater 102, e.g., 50 degrees C. In this example, the passenger heating subassembly 328 and the second defroster heating subassembly 330 are arranged in parallel in the second heating loop 324, but it should be understood that the passenger heating subassembly 328 and the second defroster heating subassembly 330 may be arranged in series in some embodiments, as desired.

In this manner, a portion of the energy needed by the defroster system 106 can be supplied by the heat pump 108, which can operate more efficiently by delivering the second heated fluid at the lower, second temperature. While this may not be sufficient to fully heat the air entering the defroster system 106, the amount of remaining energy needed to heat the air is reduced, thereby reducing the amount of energy needed from the less efficient first defroster heating subassembly 322 to deliver a sufficient amount of total heat for operation of the defroster system 106. That is, the first defroster heating subassembly 322 need only provide a smaller stepwise amount of heating, rather than the entire amount of heating at much lower efficiency for the high-demand defroster system 106. This in turn may also allow the temperature of the first heated fluid being supplied by the first heating element to the first defroster heating subassembly 322 to be reduced, thereby further increasing system efficiency.

Another advantage of this arrangement is that the first heating loop 318 may be reduced in length, such that the first heated fluid that is heated to the higher first temperature may be delivered to the defroster system 106 more efficiently. Meanwhile, the second heating loop 324 can be kept longer, such that the remaining second heated fluid can be delivered to the passenger area 101 with less heat loss. This is because the second heated fluid is only heated to the lower second temperature (if supplied entirely by the heat pump 108) or the lower third temperature (if further heated by the second heating element 326), which are closer to the ambient temperature than the higher first temperature of the first heated fluid in the first heating loop 318, such that the entire system 100 experiences less overall heat loss as a result.

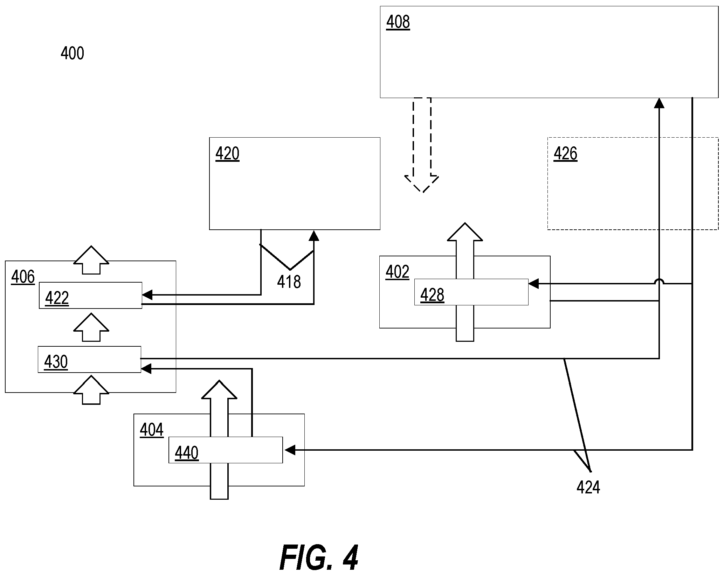

Referring now to FIG. 4, a heating system 400 having additional elements for a vehicle, such as the vehicle 10 of FIG. 1, for example, is illustrated according to an embodiment. In the example of FIG. 4, the heating system 400 includes a first heating loop 418 having a first heating element 420 for the defroster heating subassembly 422 of a defroster system 406. The heating system 400 further includes a second heating loop 424 having a heat pump 408 and an optional second heating element 426 for the passenger heating subassembly 428 of the passenger area heater 402 and the second defroster heating subassembly 430 of the defroster system 406. In this example, the heat pump 408 may also optionally supply the first heated fluid to the first heating element 420 of the first heating loop 418 at the lower second temperature, which can then be heated to the higher first temperature by the first heating element 320. In this example, the heat pump 408 may also optionally provide heated air directly, e.g., into a passenger area, driver area, etc. This arrangement may provide an additional advantage of cooling the first heated fluid to a more efficient temperature for the heat pump 408 when the first heated temperature is elevated. For example, the second (lower) temperature of first heated fluid may still be higher than an optimal temperature for operation of the heat pump 408 in some operating scenarios. In these types of scenarios, where there is also a need to provide heating to the passenger area and/or driver area, providing the first heated fluid may serve two purposes: providing heating to the passenger and/or driver area, and also cooling the first heated fluid (i.e., by heating the cold air in the passenger and/or driver area) to a lower temperature more suitable for heat pump 408 operation.

In this example, the second heating loop 424 further optionally includes a driver heating subassembly 440 for a driver area heater 404 to receive the first heated fluid from the first heating element 420 to heat a driver area of the vehicle. In this example, the driver heating subassembly 440 and the second defroster heating subassembly 430 are arranged in series in the second heating loop 424 and the passenger heating subassembly 428 is arranged in parallel with the other elements in the second heating loop 424, but it should be understood that different components of the first heating loop 418 and/or second heating loop 424 may be arranged in different configurations, as desired. For example, in some embodiments, the driver heating subassembly 440 may be included as part of the first heating loop 418, in series or in parallel with the defroster heating subassembly 422, and may be heated using the first heated fluid at the higher first temperature, as desired.

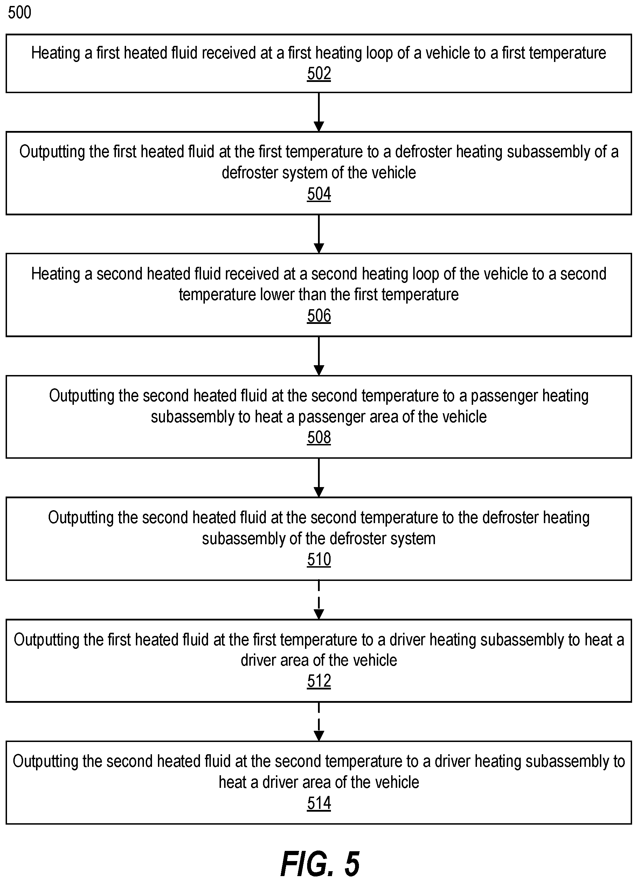

FIG. 5 is a flow chart of operations 500 of an exemplary method of operating a heating system for a vehicle, according to an example. In this example, the operations 500 may include heating a first heated fluid received at a first heating loop of a vehicle to a first temperature (Block 502). The operations 500 may further include outputting the first heated fluid at the first temperature to a defroster heating subassembly of a defroster system of the vehicle (Block 504). The operations 500 may further include heating a second heated fluid received at a second heating loop of the vehicle to a second temperature lower than the first temperature (Block 506). The operations 500 may further include outputting the second heated fluid at the second temperature to a passenger heating subassembly to heat a passenger area of the vehicle (Block 508). The operations 500 may further include outputting the second heated fluid at the second temperature to the defroster heating subassembly of the defroster system (Block 510).

In some examples, the operations may further include outputting the first heated fluid at the first temperature to a driver heating subassembly to heat a driver area of the vehicle (Block 514) and/or outputting the second heated fluid at the second temperature to a driver heating subassembly to heat a driver area of the vehicle (Block 516), as desired.

Additional examples include:
Example 1. A heating system for a vehicle, the system comprising:
   a first heating loop comprising:
   a first heating element to heat a first heated fluid to a first temperature; and
   a first defroster heating subassembly in a defroster system of the vehicle to receive the heated fluid from the first heating element; and
   a second heating loop comprising:
   a heat pump for delivering a second heated fluid at a second temperature lower than the first temperature;
   a passenger heating subassembly to receive the heated fluid from the heat pump to heat a passenger area of the vehicle; and
   a second defroster heating subassembly in the defroster system to receive the heated fluid from the heat pump.
Example 2. The heating system of example 1, wherein the passenger heating subassembly and the second defroster heating subassembly are arranged in parallel in the second heating loop.
Example 3. The heating system of example 1, wherein the passenger heating subassembly and the second defroster heating subassembly are arranged in series in the second heating loop.
Example 4. The heating system of any preceding example, wherein the second heating loop further comprises a driver heating subassembly to receive the second heated fluid from the heat pump to heat a driver area of the vehicle.
Example 5. The heating system of any preceding example, wherein the first heating loop further comprises a driver heating subassembly to receive the first heated fluid from the first heating element to heat a driver area of the vehicle.
Example 6. The heating system of any preceding example, wherein the first heating loop comprises a first supply line to receive the first heated fluid at the first temperature from the first heating element, and
   wherein the second heating loop comprises a second supply line to receive the second heated fluid from the heat pump.
Example 7. The heating system of any preceding example, further comprising at least one return line connected to at least one of the first heating loop and the second heating loop to return at least one of the first heated fluid and the second heated fluid to the heat pump.
Example 8. The heating system of any preceding example, wherein the first temperature is greater than 65 degrees C.
Example 9. The heating system of any preceding example, wherein the second temperature is less than 50 degrees C.
Example 10. The heating system of any preceding example, wherein the second heating loop comprises a second heating element to heat the second heated fluid received from the heat pump to a third temperature higher than the second temperature and lower than the first temperature, and
   wherein the passenger heating subassembly and the second defroster heating subassembly receive the second heated fluid at the third temperature from the second heating element.
Example 11. A vehicle comprising:
   a defroster system;
   a driver area;
   a passenger area; and
   a heating system comprising:
   a first heating loop comprising:
   a first heating element to heat a first heated fluid to a first temperature; and
   a first defroster heating subassembly in the defroster system to receive the first heated fluid from the first heating element; and
   a second heating loop comprising:
   a heat pump for delivering a second heated fluid at a second temperature lower than the first temperature;
   a passenger heating subassembly to receive the second heated fluid from the heat pump to heat the passenger area; and
   a second defroster heating subassembly in the defroster system to receive the second heated fluid from the heat pump.
Example 12. The vehicle of example 11, wherein the second heating loop further comprises a driver heating subassembly to receive the second heated fluid from the heat pump to heat the driver area.
Example 13. The vehicle of any of examples 11 and 12, wherein the first heating loop further comprises a driver heating subassembly to receive the first heated fluid from the first heating element to heat the driver area.
Example 14. The vehicle of any of examples 11-13, wherein the first temperature is greater than 65 degrees C.
Example 15. The vehicle of any of examples 11-14, wherein the second temperature is less than 50 degrees C.
Example 16. The vehicle of any of examples 11-15, wherein the vehicle comprises a passenger bus.
Example 17. The vehicle of any of examples 11-15, wherein the vehicle comprises a heavy truck.
Example 18. A method comprising:
   heating a first heated fluid received at a first heating loop of a vehicle to a first temperature;
   outputting the first heated fluid at the first temperature to a defroster heating subassembly of a defroster system of the vehicle;
   heating a second heated fluid received at a second heating loop of the vehicle to a second temperature lower than the first temperature;
   outputting the second heated fluid at the second temperature to a passenger heating subassembly to heat a passenger area of the vehicle; and
   outputting the second heated fluid at the second temperature to the defroster heating subassembly of the defroster system.
Example 19. The method of example 18, further comprising:
   outputting the first heated fluid at the first temperature to a driver heating subassembly to heat a driver area of the vehicle.
Example 20. The method of any of examples 18 and 19, further comprising:
   outputting the second heated fluid at the second temperature to a driver heating subassembly to heat a driver area of the vehicle.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A heating system for a vehicle, the system comprising:
a first heating loop comprising:
a first heating element to heat a first heated fluid to a first temperature; and
a first defroster heating subassembly in a defroster system of the vehicle to receive the heated fluid from the first heating element; and
a second heating loop comprising:
a heat pump for delivering a second heated fluid at a second temperature lower than the first temperature;
a passenger heating subassembly to receive the heated fluid from the heat pump to heat a passenger area of the vehicle; and
a second defroster heating subassembly in the defroster system to receive the heated fluid from the heat pump.

2. The heating system of claim 1, wherein the passenger heating subassembly and the second defroster heating subassembly are arranged in parallel in the second heating loop.

3. The heating system of claim 1, wherein the passenger heating subassembly and the second defroster heating subassembly are arranged in series in the second heating loop.

4. The heating system of any preceding claim, wherein the second heating loop further comprises a driver heating subassembly to receive the second heated fluid from the heat pump to heat a driver area of the vehicle.

5. The heating system of any preceding claim, wherein the first heating loop further comprises a driver heating subassembly to receive the first heated fluid from the first heating element to heat a driver area of the vehicle.

6. The heating system of any preceding claim, wherein the first heating loop comprises a first supply line to receive the first heated fluid at the first temperature from the first heating element, and
wherein the second heating loop comprises a second supply line to receive the second heated fluid from the heat pump.

7. The heating system of any preceding claim, further comprising at least one return line connected to at least one of the first heating loop and the second heating loop to return at least one of the first heated fluid and the second heated fluid to the heat pump.

8. The heating system of any preceding claim, wherein the first temperature is greater than 65 degrees C.

9. The heating system of any preceding claim, wherein the second temperature is less than 50 degrees C.

10. The heating system of any preceding claim, wherein the second heating loop comprises a second heating element to heat the second heated fluid received from the heat pump to a third temperature higher than the second temperature and lower than the first temperature, and
wherein the passenger heating subassembly and the second defroster heating subassembly receive the second heated fluid at the third temperature from the second heating element.

11. A vehicle comprising:
a defroster system;
a driver area;
a passenger area; and
a heating system comprising:
a first heating loop comprising:
a first heating element to heat a first heated fluid to a first temperature; and
a first defroster heating subassembly in the defroster system to receive the first heated fluid from the first heating element; and
a second heating loop comprising:
a heat pump for delivering a second heated fluid at a second temperature lower than the first temperature;
a passenger heating subassembly to receive the second heated fluid from the heat pump to heat the passenger area; and
a second defroster heating subassembly in the defroster system to receive the second heated fluid from the heat pump.

12. The vehicle of claim 11, wherein the second heating loop further comprises a driver heating subassembly to receive the second heated fluid from the heat pump to heat the driver area.

13. The vehicle of any of claims 11-12, wherein the vehicle comprises a passenger bus.

14. The vehicle of any of claims 11-12, wherein the vehicle comprises a heavy truck.

15. A method comprising:
heating a first heated fluid received at a first heating loop of a vehicle to a first temperature;
outputting the first heated fluid at the first temperature to a defroster heating subassembly of a defroster system of the vehicle;
heating a second heated fluid received at a second heating loop of the vehicle to a second temperature lower than the first temperature;
outputting the second heated fluid at the second temperature to a passenger heating subassembly to heat a passenger area of the vehicle; and
outputting the second heated fluid at the second temperature to the defroster heating subassembly of the defroster system.

## Amended claims

### Amended claims in accordance with Rule 137(2) EPC.

1. A heating system (100, 400) for a vehicle (10), the system comprising:
a first heating loop (318, 418) comprising:
a first heating element (320, 420) to heat a first heated fluid to a first temperature; and
a first defroster heating subassembly (322) in a defroster system (106, 206, 406) of the vehicle (10) to receive the heated fluid from the first heating element (320, 420); and
a second heating loop (324, 424) comprising:
a heat pump (108, 208) for delivering a second heated fluid at a second temperature lower than the first temperature;
a passenger heating subassembly (328) to receive the heated fluid from the heat pump (108, 208) to heat a passenger area (101) of the vehicle (10); and
a second defroster heating subassembly (330, 430) in the defroster system (106, 206, 406) to receive the heated fluid from the heat pump (108, 208), wherein, during defrost, the defroster system (106, 206, 406) is arranged such that the same defroster airstream is heated sequentially by first receiving the second heated fluid from the second defroster heating subassembly (330, 430) and subsequently receiving the first heated fluid from the first defroster heating subassembly (322).

2. The heating system (100, 400) of claim 1, wherein the passenger heating subassembly (328) and the second defroster heating subassembly (330, 430) are arranged in parallel in the second heating loop (324, 424).

3. The heating system (100, 400) of claim 1, wherein the passenger heating subassembly (328) and the second defroster heating subassembly (330, 430) are arranged in series in the second heating loop (324, 424).

4. The heating system (100, 400) of any preceding claim, wherein the second heating loop (324, 424) further comprises a driver heating subassembly (440) to receive the second heated fluid from the heat pump (108, 208) to heat a driver area (103) of the vehicle (10).

5. The heating system (100, 400) of any preceding claim, wherein the first heating loop (318, 418) further comprises a driver heating subassembly (440) to receive the first heated fluid from the first heating element (320, 420) to heat a driver area (103) of the vehicle (10).

6. The heating system (100, 400) of any preceding claim, wherein the first heating loop (318, 418) comprises a first supply line (322) to receive the first heated fluid at the first temperature from the first heating element (320, 420), and
wherein the second heating loop (324, 424) comprises a second supply line (336) to receive the second heated fluid from the heat pump (108, 208).

7. The heating system (100, 400) of any preceding claim, further comprising at least one return line (334) connected to at least one of the first heating loop (318, 418) and the second heating loop (324, 424) to return at least one of the first heated fluid and the second heated fluid to the heat pump (108, 208).

8. The heating system (100, 400) of any preceding claim, wherein the first temperature is greater than 65 degrees C.

9. The heating system (100, 400) of any preceding claim, wherein the second temperature is less than 50 degrees C.

10. The heating system (100, 400) of any preceding claim, wherein the second heating loop (324, 424) comprises a second heating element (326, 426) to heat the second heated fluid received from the heat pump (108, 208) to a third temperature higher than the second temperature and lower than the first temperature, and
wherein the passenger heating subassembly (328) and the second defroster heating subassembly (330, 430) receive the second heated fluid at the third temperature from the second heating element (326, 426).

11. A vehicle (10) comprising:
a defroster system (106, 206, 406);
a driver area (103);
a passenger area (101); and
a heating system (100, 400) comprising:
a first heating loop (318, 418) comprising:
a first heating element (320, 420) to heat a first heated fluid to a first temperature; and
a first defroster heating subassembly (322) in the defroster system (106, 206, 406) to receive the first heated fluid from the first heating element (320, 420); and
a second heating loop (324, 424) comprising:
a heat pump (108, 208) for delivering a second heated fluid at a second temperature lower than the first temperature;
a passenger heating subassembly (328) to receive the second heated fluid from the heat pump (108, 208) to heat the passenger area (101); and
a second defroster heating subassembly (330, 430) in the defroster system (106, 206, 406) to receive the second heated fluid from the heat pump (108, 208), wherein, during defrost, the defroster system (106, 206, 406) is arranged such that the same defroster airstream is heated sequentially by first receiving the second heated fluid from the second defroster heating subassembly (330, 430) and subsequently receiving the first heated fluid from the first defroster heating subassembly (322).

12. The vehicle (10) of claim 11, wherein the second heating loop (324, 424) further comprises a driver heating subassembly (440) to receive the second heated fluid from the heat pump (108, 208) to heat the driver area (103).

13. The vehicle (10) of any of claims 11-12, wherein the vehicle (10) comprises a passenger bus.

14. The vehicle (10) of any of claims 11-12, wherein the vehicle (10) comprises a heavy truck.

15. A method comprising:
heating a first heated fluid received at a first heating loop (318, 418) of a vehicle (10) to a first temperature;
outputting the first heated fluid at the first temperature to a defroster heating subassembly of a defroster system (106, 206, 406) of the vehicle (10);
heating, by a heat pump (108, 208), a second heated fluid received at a second heating loop (324, 424) of the vehicle (10) to a second temperature lower than the first temperature;
outputting the second heated fluid at the second temperature to a passenger heating subassembly (328) to heat a passenger area (101) of the vehicle (10); and
outputting the second heated fluid at the second temperature to the defroster heating subassembly of the defroster system,
wherein, during defrost, the defroster system (106, 206, 406) is arranged such that the same defroster airstream is heated sequentially by first receiving the second heated fluid from the second defroster heating subassembly and subsequently receiving the first heated fluid from the first defroster heating subassembly.
